(19) **Europäisches Patentamt / European Patent Office / Office européen des brevets**

(11) **EP 4 597 630 A1**

(12) **EUROPEAN PATENT APPLICATION**
published in accordance with Art. 153(4) EPC

(43) Date of publication:
06.08.2025  Bulletin 2025/32

(21) Application number: 23869593.6

(22) Date of filing: 27.04.2023

(51) International Patent Classification (IPC):
*H01M 4/587* (2010.01)    *H01M 10/0525* (2010.01)

(52) Cooperative Patent Classification (CPC):
H01M 4/366; H01M 4/133; H01M 4/36;
H01M 4/583; H01M 4/587; H01M 10/0525;
H01M 2004/021; H01M 2004/027; Y02E 60/10

(86) International application number:
PCT/CN2023/091185

(87) International publication number:
WO 2024/066338 (04.04.2024 Gazette 2024/14)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 30.09.2022  CN 202211206036

(71) Applicant: **Ningde Amperex Technology Limited
Ningde, Fujian 352100 (CN)**

(72) Inventors:
• **ZHENG, Zigui
  Ningde, Fujian 352100 (CN)**
• **TAN, Fujin
  Ningde, Fujian 352100 (CN)**
• **YI, Zheng
  Ningde, Fujian 352100 (CN)**
• **XIE, Yuansen
  Ningde, Fujian 352100 (CN)**

(74) Representative: **Icosa
83 avenue Denfert-Rochereau
75014 Paris (FR)**

(54) **NEGATIVE ELECTRODE ACTIVE MATERIAL, NEGATIVE ELECTRODE SHEET COMPRISING SAME, ELECTROCHEMICAL DEVICE AND ELECTRIC DEVICE**

(57)  This application provides a negative active material, a negative electrode plate containing same, an electrochemical device, and an electrical device. The negative active material includes a hard carbon material. The hard carbon material includes a plurality of micropores and an average delithiation potential vs Li/Li$^+$ of the hard carbon material is 0.15 V to 0.40 V using metallic lithium as a counter electrode.

FIG. 4

**Description**

**CROSS-REFERENCE TO RELATED APPLICATIONS**

This application claims priority to Chinese Patent Application No. 202211206036.6, filed on September 30, 2022 and entitled "NEGATIVE ACTIVE MATERIAL, NEGATIVE ELECTRODE PLATE CONTAINING SAME, ELECTROCHEMICAL DEVICE, AND ELECTRICAL DEVICE", which is incorporated herein by reference in its entirety.

**TECHNICAL FIELD**

This application relates to the technical field of electrochemical batteries, and in particular, to a negative active material, a negative electrode plate containing same, an electrochemical device, and an electrical device.

**BACKGROUND**

Secondary batteries represented by a lithium-ion secondary battery are prominently characterized by a high energy density, a long cycle life, little pollution, no memory effect, and the like. As clean energy, the secondary batteries have been gradually applied to a wide range of fields from electronic products to large-sized devices such as an electric vehicle to meet the strategy of sustainable development of the environment and energy. This imposes higher requirements on the energy density of the secondary batteries.

Currently, graphite is still a main commercially available negative electrode material of secondary batteries. Graphite exhibits advantages such as a high electrical conductivity and high stability. However, the theoretical capacity of graphite is approximately 372 mAh/g. The development in recent years has almost reached the upper limit of the theoretical capacity. It is difficult to further increase the energy density of a lithium-ion battery that uses graphite as a negative electrode material.

Therefore, developing a negative active material to increase the energy density of the secondary batteries is of great significance to the development of the secondary batteries.

**SUMMARY**

In view of the above problems in the prior art, this application provides a negative active material, a negative electrode plate containing same, an electrochemical device, and an electrical device. The negative active material exhibits a low average delithiation potential and can increase the energy density of the negative electrode plate, the electrochemical device, and the electrical device.

A first aspect of this application provides a negative active material, including a hard carbon material. The hard carbon material includes a plurality of micropores and an average delithiation potential vs $Li/Li^+$ of the negative active material is 0.15 V to 0.40 V using metallic lithium as a counter electrode.

In any embodiment, an average molar ratio between oxygen atoms and carbon atoms in the hard carbon material, denoted as an O/C ratio, is 0.01 to 0.10.

In any embodiment, the O/C ratio of the hard carbon material is 0.02 to 0.07.

In any embodiment, the negative active material satisfies: $1 > \frac{C_1\ \text{mAh/g}}{C_0\ \text{mAh/g}} \geq 0.55$, where $C_1$ mAh/g represents a delithiation capacity of the hard carbon material when a potential vs $Li/Li^+$ is 0 V to 0.15 V using metallic lithium as a counter electrode, and $C_0$ mAh/g represents a total delithiation capacity of the hard carbon material using the metallic lithium as a counter electrode.

In any embodiment, in an X-ray diffraction pattern of the hard carbon material, a characteristic peak exists corresponding to a diffraction angle of 18° to 30°, and a full width at half maximum of the characteristic peak is 4° to 12°.

In any embodiment, the hard carbon material includes a core and a cladding layer that covers at least a part of a surface of the core. The rich micropores are located in the core.

In any embodiment, a micropore volume V of the hard carbon material measured by a carbon dioxide adsorption method, expressed in a unit of cc/g, satisfies: $0 < V \leq 0.05$ cc/g. A diameter d of the micropores, expressed in a unit of nm, satisfies: $d \leq 0.9$ nm.

In any embodiment, a true density $\rho$ of the hard carbon material measured by an n-butanol impregnation method, expressed in a unit of g/cc, is 1.1 to 1.6 g/cc.

In any embodiment, $Dv_{50}$ of the hard carbon material is 6 $\mu$m to 15 $\mu$m.

In any embodiment, a specific surface area of the hard carbon material is 2 $m^2$/g to 10 $m^2$/g.

A second aspect of this application provides a negative electrode plate, including a negative current collector and a negative active material layer disposed on at least one surface of the negative current collector. The negative active material layer includes the negative active material according to the first aspect.

In any embodiment, the negative active material layer further includes artificial graphite, and a mass ratio A of the negative active material to the artificial graphite satisfies: $0 < A \leq 1/3$.

In any embodiment, a compacted density PD of the negative active material layer, expressed in a unit of $g/cm^3$, is 1.0 $g/cm^3$ to 1.7 $g/cm^3$.

In any embodiment, a porosity of the negative active material layer is 15% to 30%.

A third aspect of this application provides an electrochemical device, including the negative electrode plate according to the second aspect of this application.

A fourth aspect of this application provides an electrical device, including the electrochemical device according to the third aspect of this application.

## BRIEF DESCRIPTION OF DRAWINGS

FIG. 1 is a schematic diagram of an electrochemical device according to an embodiment of this application;
FIG. 2 is an exploded view of the electrochemical device shown in FIG. 1 according to an embodiment of this application;
FIG. 3 is a schematic diagram of an electrical device using an exemplary electrochemical device of this application as a power supply; and
FIG. 4 is a potential-capacity curve of a button battery according to Embodiment 4 of this application.

List of reference numerals:

5. electrochemical device; 51. housing; 52. electrode assembly; 53. cover plate

## DETAILED DESCRIPTION

The following describes in detail an electrochemical device and an electrical device according to this application with due reference to drawings. However, unnecessary details may be omitted in some cases. For example, a detailed description of a well-known matter or repeated description of an essentially identical structure may be omitted. That is intended to prevent the following descriptions from becoming unnecessarily lengthy, and to facilitate understanding by a person skilled in the art. In addition, the drawings and the following descriptions are intended for a person skilled in the art to thoroughly understand this application, but not intended to limit the subject-matter set forth in the claims.

A "range" disclosed herein is defined in the form of a lower limit and an upper limit. A given range is defined by a lower limit and an upper limit selected. The selected lower and upper limits define the boundaries of a particular range. A range so defined may be inclusive or exclusive of the end values, and a lower limit of one range may be arbitrarily combined with an upper limit of another range to form a range. For example, if a given parameter falls within a range of 60 to 120 and a range of 80 to 110, it is expectable that the parameter may fall within a range of 60 to 110 and a range of 80 to 120 as well. In addition, if lower-limit values 1 and 2 are listed, and if upper-limit values 3, 4, and 5 are listed, the following ranges are all expectable: 1 to 3, 1 to 4, 1 to 5, 2 to 3, 2 to 4, and 2 to 5. Unless otherwise specified herein, a numerical range "a to b" is a brief representation of a combination of any real numbers between a and b inclusive, where both a and b are real numbers. For example, a numerical range "0 to 5" herein means all real numbers recited between 0 and 5 inclusive, and the expression "0 to 5" is just a brief representation of a combination of such numbers. In addition, a statement that a parameter is an integer greater than or equal to 2 is equivalent to a disclosure that the parameter is an integer such as 2, 3, 4, 5, 6, 7, 8, 9, 10, 11, 12, and so on.

Unless otherwise expressly specified herein, any embodiments and optional embodiments hereof may be combined with each other to form a new technical solution.

Unless otherwise expressly specified herein, any technical features and optional technical features hereof may be combined with each other to form a new technical solution.

Unless otherwise expressly specified herein, the term "or" is inclusive. For example, the expression "A or B" means "A alone, B alone, or both A and B". More specifically, all and any of the following conditions satisfy the condition "A or B" : A is true (or existent) and B is false (or absent); A is false (or absent) and B is true (or existent); and, both A and B are true (or existent).

As mentioned in the BACKGROUND section above, seeking a negative active material to increase the energy density of the secondary batteries is of great significance to the development of the secondary batteries. Among the multitudinous negative active materials to be developed, the hard carbon material has attracted much attention because the material is superior in gravimetric capacity, rate performance, low-temperature performance, and cycle performance.

With more than such advantages, the hard carbon material can be used not only as a negative active material of a lithium-ion battery, but also as a negative active material of a sodium-ion battery, and embraces a prospect of broad application. However, the existing hard carbon material exhibits a high irreversible capacity, an unsatisfactory level of exertion of capacity, and other defects. When applied to a lithium-ion battery or sodium-ion battery, the hard carbon material increases the energy density of the battery to a very limited degree, and can hardly meet the requirements in practical applications.

In view of this, the applicant discloses a negative active material after in-depth thinking. The negative active material exhibits a low average delithiation potential, and can increase the energy density of the secondary battery when applied to the secondary battery.

**Negative active material**

A first aspect of this application provides a negative active material, including a hard carbon material. The hard carbon material includes a plurality of micropores and an average delithiation potential vs $Li/Li^+$ of the hard carbon material is 0.15 V to 0.40 V using metallic lithium as a counter electrode. Without intending to be bound by any theory or explanation, the applicant unexpectedly finds that, when the hard carbon material includes a plurality of micropores, lithium ions can be stored in the micropores during lithiation, thereby providing a reversible capacity. When the hard carbon material includes such a specified microporous structure that the average delithiation potential of the hard carbon material falls within the above relatively low range using metallic lithium as a counter electrode, the hard carbon material exhibits a high reversible capacity on the one hand, especially a low-voltage-platform capacity, and on the other hand, exhibits good lithium-ion diffusion kinetics. Therefore, when applied to a secondary battery, the negative active material according to this application endows the secondary battery with a high energy density, a high first-cycle Coulombic efficiency, and good cycle performance.

The specified microporous structure is intended to represent any microporous structure that can make the average delithiation potential vs $Li/Li^+$ of the hard carbon material be 0.15 V to 0.40 V using metallic lithium as a counter electrode. The microporous structure may be, but is not limited to, a microporous structure with the number of micropores and the volume of the micropores falling within any appropriate ranges, and/or a microporous structure with an appropriate morphology of the micropores and appropriate distribution positions of the micropores in the hard carbon material. A person skilled in the art may obtain the hard carbon material of a specified microporous structure in many ways to make the average delithiation potential vs $Li/Li^+$ of the negative active material be 0.15 V to 0.40 V using metallic lithium as a counter electrode, and the ways of obtaining the hard carbon material are not limited here.

In some embodiments, an average molar ratio between oxygen atoms and carbon atoms in the hard carbon material, denoted as an O/C ratio, may be 0.01 to 0.10. For example, the O/C ratio of the hard carbon material may be 0.01, 0.02, 0.05, 0.07, 0.10, or a value falling within a range formed by any two thereof. Optionally, the O/C ratio of the hard carbon material may be 0.02 to 0.07. For example, the O/C ratio of the hard carbon material may be 0.02, 0.03, 0.04, 0.05, 0.06, 0.07, or a value falling within a range formed by any two thereof. Without intending to be bound by any theory or explanation, when the O/C ratio of the hard carbon material falls within the above appropriate range, the presence of a small amount of oxygen atoms is conducive to the deintercalation of lithium ions inside the micropores, thereby benefiting the exertion of the capacity of the negative active material. In addition, when the O/C ratio falls within the above appropriate range, the risk of irreversible capacity loss caused by an excessive oxygen content can be reduced, thereby increasing the reversible capacity of the negative active material. Therefore, when applied to a secondary battery, the negative active material according to this application further increases the energy density and the first-cycle Coulombic efficiency of the secondary battery.

In some embodiments, the negative active material satisfies: $1 > \frac{C_1 \text{ mAh/g}}{C_0 \text{ mAh/g}} \geq 0.55$, where $C_1$ mAh/g represents a delithiation capacity of the hard carbon material when a potential vs $Li/Li^+$ is 0 V to 0.15 V using metallic lithium as a counter electrode, and $C_0$ mAh/g represents a total delithiation capacity of the hard carbon material using the metallic lithium as a counter electrode. Without intending to be bound by any theory or explanation, in a process of testing the delithiation capacity using metallic lithium as a counter electrode, the lithium ions stored in the micropores of the hard carbon material are usually deintercalated when the potential is 0 V to 0.15 V. Therefore, the $C_1$ is highly correlated with the microporous structure in the hard carbon material. When $C_1$ meets the above conditions, it means that the microporous structure in the hard carbon material can provide a higher reversible capacity so that the delithiation capacity of the hard carbon material corresponding to a low voltage platform represents a relatively high proportion in the total delithiation capacity. The relatively high proportion of the low-voltage-platform capacity further reduces the average delithiation potential of the hard carbon material. Therefore, when applied to a secondary battery, the negative active material according to this application can further increase the energy density of the secondary battery.

In some embodiments, in an X-ray diffraction (XRD) pattern of the hard carbon material, a characteristic peak may exist corresponding to a diffraction angle of 18° to 30°, and a full width at half maximum of the characteristic peak is 4° to 12°. When such a characteristic peak exists in the XRD pattern of the negative active material, it may indicate that the 002 interplanar spacing of the hard carbon material is 0.37 nm to 0.41 nm, being much larger than the 002 interplanar spacing of graphite. The relatively large 002 interplanar spacing facilitates rapid deintercalation of lithium ions in the hard carbon material, thereby improving the reversible capacity and kinetic performance of the negative active material. Therefore, when applied to a secondary battery, the negative active material according to this application increases the energy density and the rate performance of the secondary battery.

In some embodiments, the hard carbon material may include a core and a cladding layer that covers at least a part of a surface of the core. The micropores are located in the core. The cladding layer may be a dense cladding layer containing no micropores. In some embodiments, a thickness of the cladding layer may be less than or equal to 100 nm. In some embodiments, the cladding layer may cover more than 50%, more than 80%, more than 90%, or 100% of the surface area of the core. When the hard carbon material assumes the above structure, the cladding layer can convert an open micropore on the surface of the core into a closed micropore, thereby effectively isolating the interior of the micropore from an electrolytic solution, and in turn, reducing the irreversible loss of active ions caused by an SEI film formed by the electrolytic solution inside the micropore. In this way, the hard carbon material improves the reversible capacity of the negative active material, so that the secondary battery that employs the negative active material achieves a high energy density and a high first-cycle Coulombic efficiency.

In some embodiments, the hard carbon material includes a core and a cladding layer that covers at least a part of a surface of the core. A micropore volume V of the hard carbon material measured by a carbon dioxide adsorption method, expressed in a unit of cc/g, may satisfy: $0 < V \leq 0.05$ cc/g. When the hard carbon material includes a cladding layer that covers at least a part of the surface of the core, the cladding layer can convert an open micropore on the surface of the core into a closed micropore. When some micropores are small-sized, it is difficult for carbon dioxide molecules to enter the micropores of the core for adsorption and desorption and also difficult for the carbon dioxide molecules to be adsorbed by some small-sized micropores during a test in a carbon dioxide adsorption method. Therefore, the micropore volume of the hard carbon material measured by the carbon dioxide adsorption method falls within the relatively small range. When the micropore volume of the hard carbon material measured by the carbon dioxide adsorption method falls within the above small range, on the one hand, the cladding layer can effectively isolate the interior of the micropore from the electrolytic solution, thereby reducing the irreversible loss of active ions caused by the SEI film formed by the electrolytic solution inside the micropore. On the other hand, the small-sized micropores facilitate deposition of lithium ions or sodium ions with a relatively small radius, thereby further improving the lithium or sodium storage capacity of the hard carbon material. Therefore, when applied to a secondary battery, the negative active material according to this application further increases the energy density and the first-cycle Coulombic efficiency of the secondary battery.

In some embodiments, a diameter d of the micropores, expressed in a unit of nm, satisfies: $d \leq 0.9$ nm. The diameter of the micropores falling within the appropriate range facilitates smooth deposition and extraction of lithium ions (with an ionic radius of approximately 76 pm) or sodium ions (with an ionic radius of approximately 102 pm) in the micropores, thereby improving the reversible capacity of the hard carbon particles. Therefore, the negative active material according to this application exhibits a high reversible capacity, and, when applied to a secondary battery, endows the battery with a higher energy density.

In some embodiments, a true density $\rho$ of the hard carbon material measured by an n-butanol impregnation method, expressed in a unit of g/cc, may be 1.1 to 1.6 g/cc. A true density of a graphite material measured by the n-butanol impregnation method is approximately 2.22 g/cc. In the negative active material according to this application, the hard carbon material includes a relatively large number of micropores and a relatively large 002 interplanar spacing, thereby achieving a lower true density on the basis of a high capacity. Therefore, when applied to a secondary battery, the negative active material according to this application also increases the gravimetric energy density of the secondary battery.

In some embodiments, a volume median diameter $Dv_{50}$ of the hard carbon material may be 6 $\mu$m to 15 $\mu$m. For example, $Dv_{50}$ of the hard carbon material may be 6 $\mu$m, 7 $\mu$m, 8 $\mu$m, 9 $\mu$m, 10 $\mu$m, 11 $\mu$m, 12 $\mu$m, 13 $\mu$m, 14 $\mu$m, 15 $\mu$m, or a value falling within a range formed by any two thereof. Optionally, the hard carbon material may be primary particles. When the volume median diameter of the hard carbon material falls within the above appropriate range, on the one hand, the hard carbon material is endowed with good electrolyte infiltration performance. On the other hand, the hard carbon material is endowed with a relatively small specific surface area, thereby reducing the consumption of active ions caused during initial charge by the SEI film formed on the surface of the hard carbon material. Therefore, when applied to a secondary battery, the negative active material according to this application endows the secondary battery with good kinetic performance and a high first-cycle Coulombic efficiency.

In some embodiments, a specific surface area of the hard carbon material may be 2 $m^2$/g to 10 $m^2$/g. For example, the specific surface area of the hard carbon material may be 2 $m^2$/g, 3 $m^2$/g, 4 $m^2$/g, 5 $m^2$/g, 6 $m^2$/g, 7 $m^2$/g, 8 $m^2$/g, 9 $m^2$/g, 10 $m^2$/g, or a value falling within a range formed by any two thereof. Generally, when the specific surface area of the negative active material particles is larger, the area of the SEI film formed on the surface of the negative active material particles during the initial charge of the secondary battery is larger, and more active ions are lost. In addition, when the specific surface area of the negative active material particles is larger, more binder is consumed to form the negative active material layer, and in turn, the internal resistance of the negative active material layer is higher. When the specific surface area of the hard carbon material falls within the above appropriate range, the hard carbon material applied to the secondary battery not only gives rise to an appropriate area of the SEI film formed during the first charge, but also reduces the dosage of the binder in the negative active material layer. In this way, the hard carbon material applied to the secondary battery reduces the loss of active ions and the internal resistance of the negative active material layer, thereby improving the first-cycle Coulombic efficiency, energy density, cycle performance, and safety performance of the secondary battery.

As an example, the hard carbon material in the negative active material according to this application may be obtained in the following steps S10 to S40. It is hereby noted that the hard carbon material in the negative active material according to this application may be obtained in various ways. This example is merely intended to explain this application, but not to limit this application.

S10. Put a hard carbon precursor material in an oxygen-containing atmosphere, and keep the temperature of a reaction system at 100 °C to 300 °C, so as to obtain an oxygenated hard carbon precursor material.

In step S10, the hard carbon precursor material may be one or more selected from pitch, a biomass material, or a resin material. The oxygen-containing atmosphere means an atmosphere containing oxygen, for example, compressed air, or a mixed gas of oxygen and an inert gas. In the mixed gas, a mass percent of oxygen may be 1% to 100%. The gas flow speed of the oxygen-containing atmosphere may be 0.1 to 5 L/min. The reaction duration in step S10 may be less than or equal to 48 hours.

S20. Put the oxygenated hard carbon precursor material in an inert atmosphere. Raise the temperature to 450 °C to 650 °C at a speed of 0.5 to 5 °C/min, and then keep the temperature constant for a period of time to pre-carbonize the oxygenated hard carbon precursor material and obtain a pre-carbonized product.

In step S20, the inert atmosphere may include an atmosphere that does not react parasitically with the oxygenated hard carbon precursor material, for example, may be a nitrogen atmosphere, an argon atmosphere, or another rare gas atmosphere. The gas flow speed of the inert atmosphere may be 0.1 to 5 L/min. In step S20, the constant-temperature duration may be 1 to 4 hours.

S30. Put the pre-carbonized product in an inert atmosphere. Raise the temperature to 700 °C to 1600 °C at a speed of 0.5 to 10 °C/min, and then keep the temperature constant for a period of time to further carbonize the pre-carbonized product and obtain a carbonized product.

In step S30, the inert atmosphere may include an atmosphere that does not react parasitically with the pre-carbonized product, for example, may be a nitrogen atmosphere, an argon atmosphere, or another rare gas atmosphere. The gas flow speed of the inert atmosphere may be 0.1 to 5 L/min. In step S30, the constant-temperature duration may be 1 to 12 hours. In some embodiments, after the carbonized product is obtained, the carbonized product may be pulverized and the particles of the carbonized product may be graded, so as to obtain a carbonized product with a particle diameter falling within an appropriate range.

S40. Put the carbonized product in a reducing atmosphere. Raise the temperature to 500 °C to 1100 °C at a speed of 0.5 to 20 °C/min, and then keep the temperature constant for a period of time to obtain a hard carbon material.

In step S40, the reducing atmosphere may be an atmosphere containing a reducing gas, for example, may be an acetylene-argon mixed gas in which the mass percent of acetylene is 5%, or a methane-argon mixed gas in which the mass percent of methane is 10%. The gas flow speed of the reducing atmosphere may be 0.1 to 3 L/min. In step S40, the constant-temperature duration may be 0.1 to 8 hours.

In the above example, by oxygenating the hard carbon precursor material, the oxygen content of the hard carbon precursor material is increased, and a crosslinking structure inside the hard carbon precursor material can be changed. Therefore, after carbonization, an appropriate microporous structure can be formed inside the material, and the micropore content is relatively high. By keeping the carbonized product at a constant temperature in the reducing atmosphere, on the one hand, a dense cladding layer can be formed on the surface of the carbonized product to obtain a hard carbon material that includes a core containing a plurality of micropores and a cladding layer. On the other hand, the oxygen content of the carbonized product is reduced, and the O/C ratio of the hard carbon material is caused to fall within an appropriate range. In this way, the hard carbon material containing a plurality of micropores is prepared, in which an average delithiation potential vs Li/Li$^+$ is 0.15 V to 0.40 V using metallic lithium as a counter electrode.

In this application, the average delithiation potential of the hard carbon material using metallic lithium as a counter electrode bears a meaning well known in the art, and may be determined by a method known in the art. For example, an exemplary process of determining the average delithiation potential is: mixing well a hard carbon material and an appropriate amount of binder, conductive agent, and solvent to obtain a negative electrode slurry; coating a surface of a negative current collector with the negative electrode slurry to obtain a negative electrode plate; preparing a button battery by assembling the negative electrode plate with a metallic lithium sheet used as a positive electrode; charging and discharging the button battery to determine the charge capacity and the charge energy of the button battery; and dividing the charge capacity by the charge energy to obtain the average delithiation potential of the hard carbon material.

In this application, the O/C ratio of the hard carbon material bears a meaning well known in the art, and may be determined by a method known in the art. For example, the O/C ratio of the hard carbon material may be determined with an elemental analyzer (Elementar Unicube).

In this application, $C_1$ mAh and $C_0$ mAh bear the meanings well known in the art, and $\dfrac{C_1 \text{ mAh/g}}{C_0 \text{ mAh/g}}$ may be determined by a method known in the art. For example, $\dfrac{C_1 \text{ mAh/g}}{C_0 \text{ mAh/g}}$ may be obtained by dividing a gravimetric capacity in a charging section of 0

V to 0.15 V (vs $Li/Li^+$) by a total charging capacity after the average delithiation potential is determined by the following process: mixing well a hard carbon material and an appropriate amount of binder, conductive agent, and solvent to obtain a negative electrode slurry; coating a surface of a negative current collector with the negative electrode slurry to obtain a negative electrode plate; preparing a button battery by assembling the negative electrode plate with a metallic lithium sheet used as a positive electrode; charging and discharging the button battery; and dividing the charge capacity by the charge energy to obtain the average delithiation potential of the hard carbon material.

In this application, the volume median diameter $Dv_{50}$ of the hard carbon material bears the meaning well known in the art, and is a value that splits the distribution of the hard carbon material particles with 50% above and the other half below this value in a volume-based particle size distribution, and can be determined by a method known in the art. For example, the volume median diameter may be measured by using a laser particle size analyzer (such as Mastersizer 2000E manufactured by Britain-based Malvern Instruments Ltd.) by reference to the GB/T 19077-2016 particle size distribution laser diffraction method.

In this application, the specific surface area of the hard carbon material bears a meaning well known in the art, and may be determined by a method known in the art. For example, the specific surface area of the hard carbon material is determined by a nitrogen adsorption/desorption method with a specific surface area analyzer (Tristar II 3020M).

In this application, the micropore diameter d of the hard carbon material, expressed in a unit of nm, bears a meaning well known in the art, and may be determined by a method known in the art. For example, the micropore diameter may be measured with an ASAP2460 physical adsorption analyzer in the following process: Pretreating negative active material powder by drying and degassing the powder, measuring different amounts of adsorbed carbon dioxide under different test pressures in a carbon dioxide atmosphere by use of the ASAP2460 physical adsorption analyzer, and plotting adsorption-and-desorption isotherms; and determining the shape of the pores based on the shape of a hysteresis loop, and fitting a pore size distribution curve of the micropores by using a DFT model, so as to obtain the micropore diameter d in nanometers of the hard carbon material.

**Negative electrode plate**

A second aspect of this application provides a negative electrode plate, including a negative current collector and a negative active material layer disposed on at least one surface of the negative current collector. The negative active material layer includes the negative active material according to the first aspect of this application.

The negative electrode plate according to this application includes the negative active material according to the first aspect of this application, and therefore, exhibits a high reversible capacity and good lithium-ion diffusion kinetics. Therefore, when applied to a secondary battery, the negative active material according to this application endows the secondary battery with a high energy density, a high first-cycle Coulombic efficiency, and good cycle performance.

In the negative electrode plate of this application, a negative active material other than the negative active material described in the first aspect of this application is not excluded in the negative active material layer.

In some embodiments, the negative active material layer further includes artificial graphite, and a mass ratio A of the negative active material to the artificial graphite may satisfy: $0 < A \le 1/3$. The mass ratio of the negative active material to the artificial graphite falling within the above appropriate range can not only reduce the volume expansion rate of the negative electrode plate in the fully charged state, but also increase the capacity of the negative active material layer, thereby increasing the energy density of the secondary battery.

In some embodiments, the negative active material layer further includes the artificial graphite. A compacted density PD of the negative active material layer, expressed in a unit of $g/cm^3$, may be 1.0 $g/cm^3$ to 1.7 $g/cm^3$.

In the negative electrode plate prepared by using a hard carbon material alone as a negative active material, the compacted density of the negative active material layer is usually not high, and as low as approximately 0.9 $g/cm^3$ to 1.2 $g/cm^3$. Consequently, the hard carbon material still includes relatively large voids after being cold pressed. After the hard carbon material is mixed with an appropriate proportion of artificial graphite, the negative active material particles in the negative active material layer are packed more compactly, thereby achieving the relatively high compacted density. Therefore, the mixed material can increase the content of the negative active material in the negative active material layer per unit volume, so that the secondary battery that employs the negative electrode plate according to this application can achieve a higher volumetric energy density.

In some embodiments, the negative active material layer further includes the artificial graphite. A porosity of the negative active material layer may be 15% to 30%. When the porosity of the negative active material layer falls within the above appropriate range, the electrolytic solution can thoroughly infiltrate the particles of the active material and enhance the kinetic performance. If the cross-sectional porosity is excessive, then the number of contact points between the particles of the active material is reduced, the internal resistance of the secondary battery is increased, and the energy density of the substrate is impaired.

The negative current collector of the negative electrode plate is not particularly limited in this application. The negative current collector may be a metal foil, a porous metal sheet, or a composite current collector. The composite current collector may include a polymer material substrate and a metal layer formed on at least one surface of the polymer material substrate. The composite current collector may be formed by overlaying the polymer material substrate with a metal material (for example, copper, copper alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE). As an example, the negative electrode plate is a negative electrode plate of a lithium-ion battery, and the negative current collector may be a copper foil. As another example, the negative electrode plate is a negative electrode plate of a sodium-ion battery, and the negative current collector may be a copper foil or aluminum foil.

In some embodiments, the negative current collector includes two surfaces opposite to each other in a thickness direction of the current collector. The negative active material layer may be disposed on either or both of the two surfaces of the negative current collector. For example, the negative current collector includes two surfaces opposite to each other in a thickness direction of the current collector, and the negative active material layer is disposed on either or both of the two opposite surfaces of the negative current collector.

In some embodiments, the negative active material layer further optionally includes a binder. The binder may be at least one selected from: polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly (1,1-difluoroethylene), polyethylene, polypropylene, styrene-butadiene rubber, acrylic styrene-butadiene rubber, epoxy resin, or nylon.

In some embodiments, the negative active material layer further optionally includes a conductive agent. The conductive agent may be selected from a carbon-based material, a metal-based material, a conductive polymer, or any combination thereof. As an example, the carbon-based material may be at least one selected from natural graphite, artificial graphite, superconductive carbon, acetylene black, carbon black, Ketjen black, carbon dots, carbon nanotubes, graphene, or carbon nanofibers. The metal-based material may be selected from metal powder or metal fibers. The conductive polymer may include a polyphenylene derivative.

In some embodiments, the negative active material layer further optionally includes other agents, such as a thickener (for example, sodium carboxymethyl cellulose (CMC-Na)).

The negative electrode plate in this application may be prepared by a conventional method in this field. For example, a method for preparing the negative electrode plate includes: dispersing hard carbon and optionally other negative active materials, a conductive carbon, a binder, and a thickener in a solvent such as N-methyl-pyrrolidone (NMP) or deionized water to form a homogeneous negative electrode slurry, coating a negative current collector with the negative electrode slurry, and performing steps such as drying and cold pressing to obtain a negative electrode plate.

It is hereby noted that the parameters of the negative active material layer described herein mean the parameters of a negative active material layer on a single side of the negative current collector. When the negative active material layer is disposed on both sides of the negative current collector, the parameter settings are considered to fall within the protection scope of this application as long as the parameters of the negative active material layer on any one side of the negative current collector satisfy the parameter ranges specified herein.

In addition, the negative electrode plate according to this application does not exclude other additional functional layers different from the negative active material layer. For example, in some embodiments, the negative electrode plate according to this application further includes a conductive undercoat layer (for example, formed of a conductive agent and a binder) disposed on a surface of the negative current collector and sandwiched between the negative current collector and the negative active material layer. In some other embodiments, the negative electrode plate according to this application further includes a protection layer overlaying the surface of the negative active material layer.

In this application, the compacted density of the negative active material layer bears a meaning well known in the art, and may be determined by a method known in the art. An exemplary method for determining the compacted density includes: weighing a piece of a treated negative electrode plate with an area of S by using an electronic balance (both sides of the negative current collector are coated with the negative active material layer), so as to obtain a weight denoted as $W_1$; measuring the thickness $T_1$ of the negative electrode plate with a high-precision micrometer; washing off the negative active material layer by using a solvent and performing drying; measuring the weight of the negative current collector, denoted as $W_2$; measuring the thickness $T_2$ of the negative current collector with a high-precision micrometer; and calculating the compacted density of the negative active material layer on a single side of the negative current collector as: $PD = (W_1 - W_2)/[(T_1 - T_2) \cdot S]$.

In this application, the porosity of the negative active material layer bears a meaning well known in the art, and may be determined by a method known in the art. For example, the porosity of the negative active material layer may be determined with a true density tester with reference to the standard GB/T24586-2009 *Iron ores-Determination of Apparent Density, True Density And Porosity.*

It is hereby noted that, in this application, the parameters for the negative active material or the negative active material layer may be sampled and tested during preparation of the battery, or may be sampled and tested among the prepared secondary batteries.

When the specimen is taken from a prepared lithium-ion battery, as an example, the sampling may be performed according to the following steps (1) to (3).

(1) Discharge the lithium-ion battery (for safety reasons, the battery is generally caused to be in a fully discharged state); disassemble the battery and take out a negative electrode plate; soak the negative electrode plate in dimethyl carbonate (DMC) for a period (for example, 2 to 10 hours); and then take out the negative electrode plate, dry the negative electrode plate at a specified temperature for a specified time (for example, at 60 °C for 4 hours), and take out the dried negative electrode plate. At this time, specimens may be taken from the dried negative electrode plate to test various relevant parameters of the negative active material of this application.

(2) Bake, at a specified temperature for a specified time (for example, at 400 °C for 2 hours), the negative electrode plate dried in step (1); and select a region on the baked negative electrode plate randomly to take specimens of the negative active material (for example, by scraping powder with a scraper).

(3) Sieve the negative active material collected in step (2) (for example, through a 200-mesh sieve) to finally obtain specimens ready for testing the parameters of the negative active material of this application.

**Electrochemical device**

A third aspect of this application discloses an electrochemical device. The electrochemical device includes any device in which an electrochemical reaction occurs to implement conversion between chemical energy and electrical energy. The electrochemical device may be a primary battery or a secondary battery. Specific examples of the electrochemical device include all kinds of lithium primary batteries, lithium secondary batteries, sodium primary batteries, or sodium secondary batteries.

In some embodiments, the electrochemical device according to this application includes a positive electrode plate, a negative electrode plate, a separator, and an electrolytic solution.

**[Negative electrode plate]**

The negative electrode plate used in the electrochemical device according to this application is the negative electrode plate according to the second aspect of this application.

**[Positive electrode plate]**

The material, composition, and manufacturing method of the positive electrode plate used in the electrochemical device according to this application may include any technology known in the prior art.

The positive electrode plate includes a positive current collector and a positive active material layer disposed on at least one surface of the positive current collector and containing a positive active material. As an example, the positive current collector includes two surfaces opposite to each other in a thickness direction of the current collector. The positive active material layer is disposed on one or both of the two opposite surfaces of the positive current collector.

In some embodiments, the positive active material layer includes a positive active material. The specific type of the positive active material is not particularly limited, and may be selected as required.

In some embodiments, the electrochemical device is a lithium-ion battery. The positive active material may include one or more of lithium transition metal oxide, olivine-structured lithium-containing phosphate, or a modified compound thereof. In the electrochemical device according to this application, the modified compound of each positive active material described above may be formed by modifying the positive active material, for example, by doping, surface coating, or both doping and surface coating. As an example, the lithium transition metal oxide may include one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, or a modified compound thereof. As an example, the olivine-structured lithium-containing phosphate may include one or more of lithium iron phosphate, a composite of lithium iron phosphate and carbon, lithium manganese phosphate, a composite of lithium manganese phosphate and carbon, lithium manganese iron phosphate, a composite of lithium manganese iron phosphate and carbon, or a modified compound thereof. Of such positive active materials, one may be used alone, or at least two may be used in combination.

In some embodiments, the electrochemical device is a sodium-ion battery. The positive active material may be a positive active material well known in the art for use in a sodium-ion secondary battery. As an example, the positive active material may include one or more of a sodium transition metal oxide, a polyanionic compound, or a Prussian blue compound. As an example, examples of the sodium transition metal oxide include: $Na_{1-x}Cu_hFe_kMn_lM^1_mO_{2-y}$, where $M^1$ is one or more of Li, Be, B, Mg, Al, K, Ca, Ti, Co, Ni, Zn, Ga, Sr, Y, Nb, Mo, In, Sn, or Ba, $0 < x \leq 0.33$, $0 < h \leq 0.24$, $0 \leq k \leq 0.32$, $0 < 1 \leq 0.68$, $0 \leq m < 0.1$, $h + k + 1 + m = 1$, and $0 \leq y < 0.2$; $Na_{0.67}Mn_{0.7}Ni_zM^2_{0.3-z}O_2$, where $M^2$ is one or more of Li, Mg, Al, Ca, Ti, Fe, Cu, Zn, or Ba, and $0 < z \leq 0.1$; and $Na_aLi_bNi_cMn_dFe_eO_2$, where $0.67 < a \leq 1$, $0 < b < 0.2$, $0 < c < 0.3$, $0.67 < d + e < 0.8$, and $b + c + d + e = 1$. As an example, examples of the polyanionic compound include: $A^1_fM^3_g(PO_4)_iO_jX^1_{3-j}$, where $A^1$ is one or more of H, Li, Na, K, or $NH_4$, $M^3$ is one or more of Ti, Cr, Mn, Fe, Co, Ni, V, Cu, or Zn, $X^1$ is one or more of F, Cl, or Br, $0 < f \leq 4$, $0 < g \leq 2$, $1 \leq i \leq 3$, and $0 \leq j \leq 2$; $Na_nM^4PO_4X^2$, where $M^4$ is one or more of Mn, Fe, Co, Ni, Cu, or Zn, $X^2$ is one or more of F, Cl, or Br, and $0 < n \leq 2$; $Na_pM^5_q(SO_4)_3$, where $M^5$ is one or more of Mn, Fe, Co, Ni, Cu, or Zn, $0 < p \leq 2$, and $0 < q \leq 2$; and, $Na_sMn_tFe_{3-t}(PO_4)_2(P_2O_7)$, where $0 < s \leq 4$, $0 \leq t \leq 3$, for example t is 0, 1, 1.5, 2, or 3.

As an example, examples of the Prussian blue compound include: $A^2_uM^6_v[M^7(CN)_6]_w \cdot xH_2O$, where $A^2$ is one or more of $H^+$, $NH_4^+$, an alkali metal cation, or alkaline earth metal cation, $M^6$ and $M^7$ each are independently one or more of transition metal cations, $0 < u \leq 2$, $0 < v \leq 1$, $0 < w \leq 1$, and $0 < x < 6$. For example, $A^2$ is one or more of $H^+$, $Li^+$, $Na^+$, $K^+$, $NH_4^+$, $Rb^+$, $Cs^+$, $Fr^+$, $Be^{2+}$, $Mg^{2+}$, $Ca^{2+}$, $Sr^{2+}$, $Ba^{2+}$, or $Ra^{2+}$, and $M^6$ and $M^7$ each are independently cations of one or more transition metal elements among Ti, V, Cr, Mn, Fe, Co, Ni, Cu, Zn, Sn, and W. Preferably, $A^2$ is one or more of $Li^+$, $Na^+$, $K^+$; $M^6$ is a cation of one or more transition metal elements among Mn, Fe, Co, Ni, and Cu; and $M^7$ is a cation of one or more transition metal elements among Mn, Fe, Co, Ni, and Cu.

In some embodiments, the positive active material layer further optionally includes a conductive agent. As an example, the conductive agent may include at least one of superconductive carbon, acetylene black, carbon black, Ketjen black, carbon dots, carbon nanotubes, graphene, or carbon nanofibers.

In some embodiments, the positive active material layer further optionally includes a conductive agent. As an example, the conductive agent may be selected from a carbon-based material, a metal-based material, a conductive polymer, or any combination thereof. As an example, the carbon-based material may be at least one selected from natural graphite, artificial graphite, superconductive carbon, acetylene black, carbon black, Ketjen black, carbon dots, carbon nanotubes, graphene, or carbon nanofibers. The metal-based material may be selected from metal powder or metal fibers. The conductive polymer may include a polyphenylene derivative.

In some embodiments, the positive current collector may be a metal foil or a composite current collector. As an example of the metal foil, the positive current collector may be an aluminum foil. The composite current collector may include a polymer material substrate and a metal material layer formed on at least one surface of the polymer material substrate. As an example, the metal material may be one or more selected from aluminum, aluminum alloy, nickel, nickel alloy, titanium, titanium alloy, silver, or silver alloy. As an example, the polymer material substrate may be selected from polypropylene, polyethylene terephthalate, polybutylene terephthalate, polystyrene, polyethylene, or the like.

The positive electrode plate in this application may be prepared by a conventional method in this field. For example, the positive active material layer is typically formed by coating a positive current collector with a positive electrode slurry and then performing drying and cold pressing. The positive electrode slurry is generally formed by dispersing a positive active material, an optional conductive agent, an optional binder, and any other ingredients into a solvent and then stirring well. The solvent may be, but without being limited to, N-methyl-pyrrolidone (NMP).

The positive electrode plate according to this application does not exclude other additional functional layers different from the positive active material layer. For example, in some embodiments, the positive electrode plate according to this application further includes a conductive undercoat layer (for example, formed of a conductive agent and a binder) disposed on a surface of the positive current collector and sandwiched between the positive current collector and the positive active material layer. In some other embodiments, the positive electrode plate according to this application further includes a protection layer overlaying the surface of the positive active material layer.

**[Electrolytic solution]**

The electrolytic solution serves to conduct active ions between the positive electrode plate and the negative electrode plate. The electrolytic solution for use in the electrochemical device of this application may be an electrolytic solution known in the prior art.

In some embodiments, the electrolytic solution may include an organic solvent, an electrolyte salt, and optionally a binder. The types of the organic solvent, the lithium salt, and the additive are not particularly limited, and may be selected according to actual needs.

In some embodiments, the electrochemical device is a lithium-ion battery, and the electrolyte salt may include a lithium salt. As an example, the lithium salt includes, but is not limited to, at least one of lithium hexafluorophosphate ($LiPF_6$), (lithium tetrafluoroborate ($LiBF_4$), lithium perchlorate ($LiClO_4$), lithium bisfluorosulfonimide (LiFSI), lithium bistrifluoromethanesulfonimide (LiTFSI), lithium trifluoromethanesulfonate (LiTFS), lithium difluoro(oxalato) borate (LiDFOB), lithium bis(oxalato) borate (LiBOB), lithium difluorophosphate (LiPO2F$_2$), lithium difluoro(bisoxalato) phosphate (LiDFOP), or lithium tetrafluoro(oxalato) phosphate (LiTFOP). Of the foregoing lithium salts, one may be used alone, or two or more may be used simultaneously.

In some embodiments, the electrochemical device is a sodium-ion battery, and the electrolyte salt may include a sodium salt. As an example, the sodium salt may be at least one selected from $NaPF_6$, $NaClO_4$, $NaBCl_4$, $NaSO_3CF_3$, or $Na(CH_3)C_6H_4SO_3$.

In some embodiments, as an example, the organic solvent includes but is not limited to at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), ethyl methyl sulfone (EMS), or (ethylsulfonyl) ethane (ESE). Of the foregoing organic solvents, one may be used alone, or two or more may be used simultaneously. Optionally, two or more of the foregoing organic solvents are used simultaneously.

In some embodiments, the additive may include a negative film-forming additive or a positive film-forming additive. The additive may further include an additive capable of improving specified performance of the battery, for example, an additive for improving overcharge performance of the battery, or an additive for improving high- or low-temperature performance of the battery.

As examples, such additives include, but are not limited to, at least one of fluoroethylene carbonate (FEC), vinylene carbonate (VC), vinyl ethylene carbonate (VEC), ethylene sulfate (DTD), propylene sulfate, ethylene sulfite (ES), 1,3-propane sultone (PS), 1,3-propene sultone (PST), sulfonate cyclic quaternary ammonium salt, succinic anhydride, succinonitrile (SN), adiponitrile (ADN), tris(trimethylsilane) phosphate (TMSP), or tris(trimethylsilane) borate (TMSB).

The electrolytic solution may be prepared by a conventional method in this field. For example, the electrolytic solution may be obtained by mixing well an organic solvent, an electrolyte salt, and an optional additive. The order of adding the ingredients is not particularly limited. For example, the electrolyte salt and the optional additive may be added into the organic solvent and mixed well to obtain the electrolytic solution; or, the electrolyte salt may be added into the organic solvent, and then the optional additive is added into the organic solvent and mixed well to obtain the electrolytic solution.

**[Separator]**

Disposed between the positive electrode plate and the negative electrode plate, the separator primarily serves to prevent a short circuit between the positive electrode plate and the negative electrode plate while allowing passage of active ions. The type of the separator is not particularly limited in this application, and may be any well-known porous separator that is highly stable both chemically and mechanically.

In some embodiments, the material of the separator may be one or more selected from, but without being limited to, glass fibers, non-woven fabric, polyethylene, polypropylene, or polyvinylidene fluoride. Optionally, the material of the separator may include polyethylene and/or polypropylene. The separator may be a single-layer film or a multilayer composite film. When the separator is a multilayer composite film, materials of different layers may be identical or different. In some embodiments, the separator may be coated with a ceramic coating or a metal oxide coating.

In some embodiments, the positive electrode plate, the negative electrode plate, and the separator may be made into an electrode assembly by winding or stacking.

The electrochemical device according to this application further includes an outer package configured to package the electrode assembly and the electrolytic solution. In some embodiments, the outer package may be a hard shell such as a hard plastic shell, an aluminum shell, a steel shell, or the like; or, may be a soft package such as a pouch-type package. The soft package may be made of a material such as at least one of polypropylene (PP), polybutylene terephthalate (PBT), or polybutylene succinate (PBS).

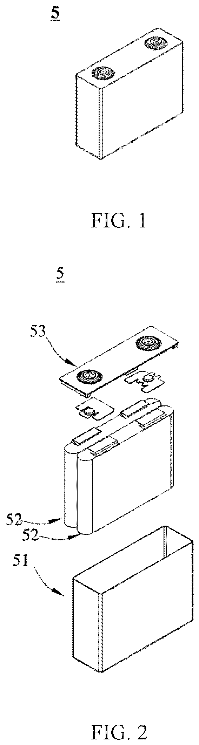

The shape of the electrochemical device is not particularly limited in this application, and may be cylindrical, prismatic or in any other shape. For example, FIG. 1 shows a prismatic electrochemical device 5 as an example.

In some embodiments, referring to FIG. 2, the outer package may include a housing 51 and a cover plate 53. The housing 51 may include a bottom plate and a side plate connected to the bottom plate. The bottom plate and the side plate close in to form an accommodation cavity. An opening that communicates with the accommodation cavity is made on the housing 51. The cover plate 53 can fit and cover the opening to close the accommodation cavity. The positive electrode plate, the negative electrode plate, and the separator may be made into the electrode assembly 52 by winding or stacking. The electrode assembly 52 is packaged in the accommodation cavity. The electrolytic solution infiltrates in the electrode assembly 52. The number of electrode assemblies 52 included in an electrochemical device 5 may be one or more, and may be determined by a person skilled in the art as actually required.

Although, in the above description of some embodiments related to the electrochemical device, the beneficial effects that can be achieved by the electrochemical device according to this application are mainly described by using the secondary battery as a specific example, a person skilled in the art can easily understand that the thickness difference between any two points on the positive current collector falls within an appropriate range as observed in a cross-section of the positive current collector in the electrochemical device according to this application. In this way, the positive current collector is endowed with high mechanical strength, and in turn, the electrochemical device exhibits high safety performance. Therefore, when applied to other types of electrochemical devices, the technical solution of this application can still achieve corresponding beneficial effects.

**Electrical device**

A fourth aspect of this application provides an electrical device. The electrical device includes the electrochemical device according to the third aspect of this application.

The electrical device is not particularly limited in this application, and may be any electronic device known in the prior art. In some embodiments, the electrical device may include, but is not limited to, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household battery, lithium-ion capacitor, or the like.

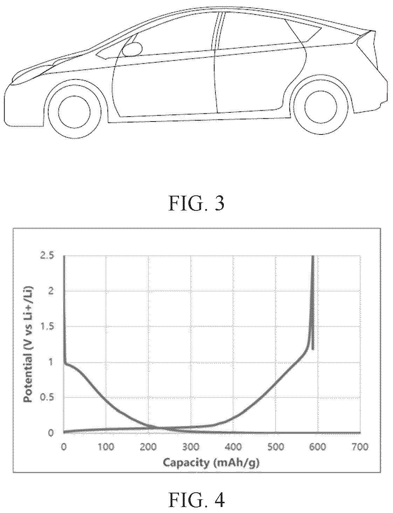

FIG. 3 shows an electrical device as an example. The electrical device may be a battery electric vehicle, a hybrid electric vehicle, a plug-in hybrid electric vehicle, or the like.

**Embodiments**

The following describes some embodiments of this application. The embodiments described below are illustrative, and are merely intended to construe this application but not to limit this application. Unless techniques or conditions are expressly specified in an embodiment hereof, the techniques or conditions described in the literature in this field or in an instruction manual of the product are applicable in the embodiment. A reagent or instrument used herein without specifying a manufacturer is a conventional product that is commercially available in the market.

**Embodiment 1**

**Preparing a negative active material**

Spreading out 200 grams of phenolic resin powder in a 25 cm×40 cm stainless steel tray, placing the tray in a vacuum oven, raising the temperature of the oven to 300 °C, and keeping the temperature constant for 3 hours, during which a compressed air is passed continuously into the oven at a speed of 3 L/min so as to obtain an oxygenated hard carbon precursor material. Putting the oxygenated hard carbon precursor material in an atmosphere of nitrogen that flows in at a speed of 1 L/min, raising the temperature to 600 °C at a speed of 1 °C/min, and keeping the temperature constant for 2 hours to obtain a pre-carbonized product. Subsequently, in the atmosphere of nitrogen that flows in at a speed of 1 L/min for the pre-carbonized product, raising the temperature to 1100 °C at a speed of 5 °C/min, and keeping the temperature constant for 2 hours. Pulverizing and grading the pre-carbonized product to obtain a carbonized product. Putting 10 grams of the carbonized product in a 5 wt% mixed atmosphere of methane and argon that flow in at a speed of 0.5 L/min, raising the temperature to 600 °C at a speed of 1 °C/min, and keeping the temperature constant for 2 hours to obtain a negative active material.

**Preparing a negative electrode plate**

Dissolving the negative active material, styrene-butadiene rubber as a binder, and sodium carboxymethyl cellulose (CMC-Na) at a mass ratio of 97: 1.5: 1.5 in deionized water to form a negative electrode slurry (in which the solid content is 40 wt%). Using a 10 $\mu$m-thick copper foil as a negative current collector. Coating the negative current collector with the negative electrode slurry for a thickness of 50 $\mu$m. Drying the slurry at 85 °C, and then performing cold pressing, cutting, and slitting. Drying the current collector under a 120 °C vacuum condition for 12 hours to obtain a negative electrode plate.

**Preparing a positive electrode plate**

Mixing lithium cobalt oxide as a positive active material, conductive carbon black (Super P), and polyvinylidene difluoride (PVDF) at a mass ratio of 97: 1.4: 1.6, adding N-methyl-pyrrolidone (NMP) as a solvent, and stirring the mixture well to obtain a positive electrode slurry in which the solid content is 72 wt%. Coating a positive current collector aluminum foil with the positive electrode slurry evenly for a thickness of 80 $\mu$m. Drying the slurry at 85 °C, and then performing cold pressing, cutting, and slitting. Drying the current collector under an 85 °C vacuum condition for 4 hours to obtain a positive electrode plate.

**Preparing an electrolytic solution**

Mixing ethylene carbonate (EC), propylene carbonate (PC), and diethyl carbonate (DEC) at a mass ratio of 1: 1: 1 to obtain an organic solvent. Dissolving $LiPF_6$ in the organic solvent, and then adding fluoroethylene carbonate (FEC) and stirring well to obtain an electrolytic solution, where, based on a total mass of the electrolytic solution, a mass percent of $LiPF_6$ is 12.5%, and a mass percent of the fluoroethylene carbonate is 5%.

**Preparing a separator**

Using a 7 $\mu$m-thick polyethylene (PE) film as a separator.

**Preparing a lithium-ion battery**

Stacking the positive electrode plate, the separator, and the negative electrode plate sequentially, and winding the stacked structure to obtain an electrode assembly. Placing the electrode assembly into an outer package, injecting the electrolytic solution, and performing steps such as sealing, standing, chemical formation, and shaping to obtain a lithium-ion battery. A designed potential range of the lithium-ion battery is 2.0 V to 4.53 V.

**Embodiments 2 to 6**

Based on the preparation process of the negative active material in Embodiment 1, the constant temperature duration of the phenolic resin in the oven is adjusted to 6 h, 9 h, 12 h, 16 h, and 20 h respectively in the process of preparing the negative active materials of Embodiments 2 to 6, so as to obtain the negative active material of Embodiments 2 to 6 respectively.
The preparation processes of the negative electrode plate, the positive electrode plate, the electrolytic solution, the separator, and the lithium-ion battery of Embodiments 2 to 6 are the same as those of Embodiment 1.

**Embodiments 7 to 11**

Based on the preparation process in Embodiment 1, $Dv_{50}$ of the hard carbon material is adjusted with reference to Table 2 to obtain the negative active material, the negative electrode plate, the positive electrode plate, the electrolytic solution, the separator, and the lithium-ion battery of Embodiments 7 to 11.

**Embodiments 12 to 16**

The negative active material is the hard carbon material and artificial graphite. Based on the preparation process in Embodiment 1, the dosage of the hard carbon material and artificial graphite is adjusted with reference to Table 3 (the mass percent of the hard carbon is based on the sum of mass of the hard carbon material and artificial graphite, and the mass percent of the artificial graphite is also based on the sum of mass of the hard carbon material and artificial graphite) to obtain the negative active material, the negative electrode plate, the positive electrode plate, the electrolytic solution, the separator, and the lithium-ion battery of Embodiments 12 to 16.

**Comparative Embodiment 1**

Based on the preparation process in Embodiment 1, the negative active material is changed to artificial graphite, and the designed potential range of the lithium-ion battery is adjusted to a range of 3.0 V to 4.48 V, so as to obtain the negative electrode plate, the positive electrode plate, the electrolytic solution, the separator, and the lithium-ion battery of Comparative Embodiment 1.

**Comparative Embodiment 2**

Based on the preparation process of Embodiment 1, the negative active material is replaced with Kuraray TZ-509R hard carbon to obtain the negative electrode plate, the positive electrode plate, the electrolytic solution, the separator, and the lithium-ion battery of Comparative Embodiment 2.

**Comparative Embodiment 3**

Based on the preparation process in Embodiment 1, the negative active material, the negative electrode plate, the positive electrode plate, the electrolytic solution, the separator, and the lithium-ion battery of Comparative Embodiments 2 are prepared without oxygenating the phenolic resin.

**Comparative Embodiments 4 to 5**

Based on the preparation process in Embodiment 1, $Dv_{50}$ of the hard carbon material is adjusted with reference to Table 1 to obtain the negative active material, the negative electrode plate, the positive electrode plate, the electrolytic solution, the separator, and the lithium-ion battery of Comparative Embodiments 7 to 5.

**Comparative Embodiment 6**

Based on the preparation process in Embodiment 1, the mass percent of the hard carbon material and artificial graphite is adjusted with reference to Table 1 (the mass percent of the hard carbon is based on the sum of mass of the hard carbon material and artificial graphite, and the mass percent of the artificial graphite is also based on the sum of mass of the hard carbon material and artificial graphite) to obtain the negative active material, the negative electrode plate, the positive electrode plate, the electrolytic solution, the separator, and the lithium-ion battery of Comparative Embodiment 6.

**Performance Test**

Disassembling a fully discharged lithium-ion battery, taking out a negative electrode, soaking the negative electrode in dimethyl carbonate (DMC) for 20 minutes, and then rinsing the negative electrode with the DMC and acetone sequentially to remove the electrolytic solution and superficial SEI film. Subsequently, putting the negative electrode in an oven and baking it at 80 °C for 12 hours to obtain a treated negative electrode plate. Scraping off the powder from the negative electrode plate with a scraper, and heat-treating the scraped powder in a tube furnace at 400 °C for 4 hours under a protection condition of an argon atmosphere to remove the binder adhering to the surface of the negative active material, so as to obtain a negative active material. Performing the following tests for the obtained negative active material layer and negative active material.

(1) XRD test

Test instrument: X-ray powder diffractometer (model: Bruker D8 ADVANCE)
Test parameters: The target is copper, the radiation source is Cu K$\alpha$, the voltage is 40 KV, the current is 40 mA, the scanning angle range is 5° to 80°, the scanning step length is 0.00836°, and the scanning time per step is 0.3 s.

(2) Testing the volume median diameter $D_{v50}$

Test instrument: Malvern particle size analyzer (Mastersizer 2000E)
Test steps: Dispersing the negative active material in an ethanol dispersant, sonicating the material for 30 minutes to obtain a specimen, adding the specimen into the Malvern particle size analyzer, and measuring $Dv_{50}$ of the hard carbon material.

(3) Testing the specific surface area

Test instrument: specific surface area analyzer (TristarII3020M)
Measuring the specific surface area of the negative active material by a nitrogen adsorption/desorption method in the following steps: Drying a specimen of the negative active material in a vacuum oven, and then putting the specimen into a specimen tube and measuring the specific surface area in the analyzer.

(4) Testing the gravimetric capacity

Mixing ingredients of the negative active material to obtain a slurry, and applying and drying the slurry to obtain a negative electrode plate. Using a lithium sheet as a positive electrode, and assembling the negative electrode plate and the positive electrode into a button battery for testing.

Discharging the button battery at a current of 0.05 C until the voltage reaches 0 mV, and then discharging the battery at a current of 50 $\mu$A until the voltage reaches 0 mV, and then discharging the battery at a current of 10 $\mu$A until the voltage reaches 0 mV. Charging the battery at a current of 0.1 C until the voltage reaches 2.5 V. Recording a capacity of the button battery at this time. Calculating the gravimetric capacity by dividing the capacity by the mass of the active material on the negative electrode plate. 0.05 C is a current value that is 0.05 times the gravimetric capacity, and 0.1 C is a current value that is 0.1 times the gravimetric capacity. Dividing the charge capacity by the discharge capacity to obtain a first-cycle Coulombic efficiency. Dividing the charge capacity by the charge energy to obtain an average delithiation potential. Dividing the gravimetric capacity in the charging section of 0 V to 0.15 V by the total charge capacity to obtain $C_1/C_0$, that is, a ratio of the delithiation gravimetric capacity in the charging section of 0 V to 0.15 V to the total gravimetric capacity. FIG. 4 shows a potential-capacity curve of a button battery prepared in Embodiment 4 and tested in the foregoing charge-and-discharge process.

(5) Testing pore size distribution of the negative active material

Test instrument: ASAP2460 physical adsorption analyzer

Pretreating negative active material powder by drying and degassing the powder, measuring different amounts of adsorbed carbon dioxide under different test pressures in a carbon dioxide atmosphere by use of the ASAP2460 physical adsorption analyzer, and plotting adsorption-and-desorption isotherms. Determining the shape of the pores based on the shape of a hysteresis loop, and fitting a pore size distribution curve of the micropores by using a DFT model. Calculating the micropore volume V in cc/g and the micropore diameter d in microns of the hard carbon material.

(6) Testing the true density of the negative active material

Taking negative active material powder, and testing the true density of the negative active material by using n-butanol as a solvent with reference to the standard GB/T24203-2009 *Carbon Materials-Determination of the True Density or True Porosity-Boiling Method.*

(7) Testing the O/C ratio

Test instrument: elemental analyzer (Elementar Unicube)

Using the CHN mode and O mode of the elemental analyzer separately to test the negative active material specimens obtained by the above method, so as to obtain the mass percent A of carbon and the mass percent B of oxygen in the negative active material. Calculating the O/C ratio as: O/C = 0.75 × B/A.

(8) Testing the porosity of the negative active material layer

Making a complete disc of the negative active material layer into a specimen. Testing 30 specimens for each embodiment or comparative embodiment, where the volume of each specimen is approximately 0.35 cm³. Testing the porosity of the negative active material layer with reference to the standard GB/T24586-2009 *Iron Ores-Determination of Apparent Density, True Density And Porosity.*

(9) Testing the compacted density of the negative active material layer

Weighing a piece of a treated negative electrode plate with an area of S by using an electronic balance (both sides of the negative current collector are coated with the negative active material layer), so as to obtain a weight denoted as $W_1$. Measuring the thickness $T_1$ of the negative electrode plate with a high-precision micrometer. Washing off the negative active material layer by using a solvent and performing drying. Measuring the weight of the negative current collector, denoted as $W_2$. Measuring the thickness $T_2$ of the negative current collector with a high-precision micrometer. Calculating the compacted density of the negative active material layer on a single side of the negative current collector as: $PD = (W_1 - W_2)/[(T_1 - T_2) \cdot S]$.

(10) Testing the energy density of the lithium-ion battery

Testing the lithium-ion batteries in groups, each group containing 5 batteries. First, charging and discharging the batteries for a first cycle in a 25 °C environment, charging the battery at a constant current of 0.5 C until the voltage reaches an upper-limit voltage, and then charging the battery at a constant voltage. Subsequently, discharging the batteries at a constant current of 0.2 C until the voltage reaches a cut-off voltage. Calculating an energy density percentage of the battery in each embodiment or comparative embodiment relative to Comparative Embodiment 1.
The upper limit of the charge voltage of a lithium-ion battery that employs a graphite-containing negative active material is 4.48 V, and the discharge cut-off voltage of the battery is 3.0 V. The upper limit of the charge voltage of a lithium-ion battery that employs a negative active material containing pure hard carbon is 4.53 V, and the discharge cut-off voltage of the battery is 2.0 V.

(11) Testing the cycle performance of the lithium-ion battery

Testing the lithium-ion batteries in groups, each group containing 5 batteries. Charging and discharging the lithium-ion battery repeatedly in the following steps, and calculating the discharge capacity retention rate and the thickness expansion rate of the lithium-ion battery:
First, charging and discharging the lithium-ion battery for a first cycle in a 25 °C environment. Charging the battery at a constant current of 1 C until the voltage reaches an upper limit, and then charging the battery at a constant voltage. Subsequently, discharging the battery at a constant current of 1 C until the voltage reaches a cut-off voltage. Recording the first-cycle discharge capacity and the thickness of a fully charged battery. Subsequently, repeating the charge-and-discharge steps for 800 cycles, and recording the 800th-cycle discharge capacity and the thickness of the fully charged lithium-ion battery. The upper limit of the charge voltage of a lithium-ion battery that employs a negative active material containing graphite or a graphite-doped substance is 4.48 V, and the discharge cut-off voltage of the battery is 3.0 V. The upper limit of the charge voltage of a lithium-ion battery that employs a negative active material containing pure hard carbon is 4.53 V, and the discharge cut-off voltage of the battery is 2.0 V. Calculating the cycle performance indicators as follows:

cycle capacity retention rate = (800th-cycle discharge capacity/first-cycle discharge capacity) $\times$ 100%; and

cycle thickness expansion rate = (thickness of the fully charged lithium-ion battery at the end of 800 cycles - thickness of the fully charged lithium-ion battery at the end of the first cycle)/thickness of the fully charged lithium-ion battery at the end of the first cycle $\times$ 100%.

Table 1 to Table 3 show the test data of each embodiment and comparative embodiment.

**Table 1**

| Embodiment | O/C ratio | True density (g/cc) | Gravimetric capacity (mAh/g) | First-cycle Coulombic efficiency (%) | Average delithiation potential (V) | $C_1/C_0$ (%) | Percentage of energy density relative to Comparative Embodiment 1 (%) |
|---|---|---|---|---|---|---|---|
| Embodiment 1 | 0.01 | 1.55 | 470 | 84 | 0.35 | 57.4 | 98 |
| Embodiment 2 | 0.03 | 1.48 | 510 | 83 | 0.30 | 60.8 | 101 |
| Embodiment 3 | 0.05 | 1.43 | 542 | 83 | 0.29 | 63.1 | 102 |
| Embodiment 4 | 0.07 | 1.35 | 588 | 83 | 0.26 | 64.6 | 104 |

(continued)

| Embodiment | O/C ratio | True density (g/cc) | Gravimetric capacity (mAh/g) | First-cycle Coulombic efficiency (%) | Average delithiation potential (V) | $C_1/C_0$ (%) | Percentage of energy density relative to Comparative Embodiment 1 (%) |
|---|---|---|---|---|---|---|---|
| Embodiment 5 | 0.09 | 1.31 | 501 | 79 | 0.31 | 60.1 | 99 |
| Embodiment 6 | 0.1 | 1.26 | 466 | 76 | 0.34 | 57.1 | 97 |
| Comparative Embodiment 1 | 0 | 2.22 | 354 | 93.5 | 0.17 | 67.8 | 100 |
| Comparative Embodiment 2 | 0.03 | 1.47 | 480 | 73 | 0.39 | 41.0 | 89 |
| Comparative Embodiment 3 | 0.15 | 1.61 | 376 | 76 | 0.42 | 46.8 | 70 |

As can be seen from Embodiments 1 to 6 and Comparative Embodiments 1 to 3, by oxygenating the precursor, the hard carbon material is endowed with a higher gravimetric capacity and a higher proportion of the delithiation capacity in the charging section of 0 V to 0.15 V relative to the total capacity. This shows that the oxygenation of the precursor can effectively increase the micropore content of the hard carbon material, thereby achieving a higher gravimetric capacity. In addition, the lithium-ion battery that employs this hard carbon material achieves the highest energy density.

Table 2

| Embodiment | $D_{v50}$ ($\mu$m) | BET (m$^2$/g) | First-cycle Coulombic efficiency (%) | Cycle capacity retention rate (%) |
|---|---|---|---|---|
| Embodiment 4 | 13 | 2 | 83 | 90 |
| Embodiment 7 | 15 | 1 | 83.5 | 90 |
| Embodiment 8 | 11 | 4 | 82 | 89 |
| Embodiment 9 | 9 | 6 | 82 | 89 |
| Embodiment 10 | 7 | 8 | 80 | 85 |
| Embodiment 11 | 6 | 10 | 79 | 85 |
| Comparative Embodiment 4 | 20 | 0.6 | 80 | 81 |
| Comparative Embodiment 5 | 3 | 18 | 77 | 80 |

As can be seen from Embodiment 4, Embodiments 7 to 11, and Comparative Embodiments 4 and 5, the hard carbon active material carbonized for three times all exhibit a specific surface area close to that of commercial graphite. When the particle size of the hard carbon active material is controlled by pulverizing the material into particles and grading the particles, the $D_{v50}$ and specific surface area of the material can be adjusted effectively, thereby further improving the first-cycle Coulombic efficiency and cycle performance of the lithium-ion battery. When the particle diameter of the negative active material is relatively small, the first-cycle irreversible capacity of the lithium-ion battery is increased, and the lithium ions are consumed continuously during cycling, thereby impairing the cycle performance of the lithium-ion battery.

Table 3

| Embodiment | Mass percent of hard carbon (wt%) | Mass percent of artificial graphite (wt%) | Compacted density of negative active material layer (g/cm$^3$) | Porosity of negative active material layer (%) | First-cycle Coulombic efficiency (%) | Cycle thickness expansion rate (%) | Cycle capacity retention rate (%) | Percentage of energy density relative to Comparative Embodiment 1 (%) |
|---|---|---|---|---|---|---|---|---|
| Embodiment 12 | 5 | 95 | 1.67 | 16.4 | 92 | 10.5 | 86.5 | 100.5 |
| Embodiment 13 | 10 | 90 | 1.63 | 16.5 | 92 | 9.3 | 86.7 | 101.7 |
| Embodiment 14 | 15 | 85 | 1.60 | 17.6 | 91 | 8.8 | 86.9 | 100.4 |
| Embodiment 15 | 20 | 80 | 1.56 | 19.9 | 90 | 7.5 | 87.6 | 98.6 |
| Embodiment 16 | 25 | 75 | 1.53 | 21.1 | 89 | 6.7 | 88.3 | 96.5 |
| Comparative Embodiment 6 | 40 | 60 | 1.49 | 23.3 | 87 | 5.5 | 90 | 90 |
| Comparative Embodiment 1 | 0 | 100 | 1.71 | 15.3 | 93.5 | 11.2 | 86 | 100 |

As can be seen from Embodiments 12 to 16 and Comparative Embodiments 1 and 6, with the increase of the mass percent of the hard carbon material, the compacted density of the negative active material layer tends to decrease, and the porosity of the negative active material layer is increased. Because the hard carbon not only exhibits a low volume expansion rate in the process of delithiation and lithiation, but also can suppress the volume expansion of graphite during charging and discharging. In an embodiment with a higher mass percent of hard carbon, the corresponding lithium-ion battery exhibits a lower cycle thickness expansion rate and a higher cycle capacity retention rate. When the mass percent of the doping artificial graphite and the mass percent of the hard carbon material are appropriate, both the hard carbon content and the compacted density of the negative electrode plate are relatively high, and the energy density of the corresponding lithium-ion battery is relatively higher.

It is hereby noted that this application is not limited to the foregoing embodiments. The foregoing embodiments are merely examples. Any and all embodiments with substantively the same constituents or exerting the same effects as the technical ideas hereof without departing from the scope of the technical solutions of this application still fall within the technical scope of this application. All kinds of variations of the embodiments conceivable by a person skilled in the art and any other embodiments derived by combining some constituents of the embodiments hereof without departing from the subject-matter of this application still fall within the scope of this application.

## Claims

1. A negative active material, comprising a hard carbon material, wherein the hard carbon material comprises a plurality of micropores and an average delithiation potential vs Li/Li$^+$ of the hard carbon material is 0.15 V to 0.40 V using metallic lithium as a counter electrode.

2. The negative active material according to claim 1, wherein a molar ratio between oxygen atoms and carbon atoms in the hard carbon material, denoted as an O/C ratio, is 0.01 to 0.10.

3. The negative active material according to claim 1 or 2, wherein a molar ratio between oxygen atoms and carbon atoms in the hard carbon material, denoted as an O/C ratio, is 0.02 to 0.07.

4. The negative active material according to any one of claims 1 to 3, satisfying: $1 > \frac{C_1 \, mAh/g}{C_0 \, mAh/g} \geq 0.55$ , wherein $C_1$ mAh/g represents a delithiation capacity of the hard carbon material when a potential vs Li/Li$^+$ is 0 V to 0.15 V using metallic lithium as a counter electrode, and $C_0$ mAh/g represents a total delithiation capacity of the hard carbon material using the metallic lithium as a counter electrode.

5. The negative active material according to any one of claims 1 to 4, wherein, in an X-ray diffraction pattern of the hard carbon material, a characteristic peak exists corresponding to a diffraction angle of 18° to 30°, and a full width at half maximum of the characteristic peak is 4° to 12°.

6. The negative active material according to any one of claims 1 to 5, wherein the hard carbon material comprises a core and a cladding layer covering at least a part of a surface of the core, and the plurality of micropores are located in the core.

7. The negative active material according to any one of claims 1 to 6, wherein a micropore volume V of the hard carbon material measured by a carbon dioxide adsorption method, expressed in a unit of cc/g, satisfies: $0 < V \leq 0.05$ cc/g, and a diameter d of the micropores, expressed in a unit of nm, satisfies: $d \leq 0.9$ nm.

8. The negative active material according to any one of claims 1 to 7, wherein the negative active material satisfies at least one of the following conditions:

    (1) a true density $\rho$ of the hard carbon material measured by an n-butanol impregnation method, expressed in a unit of g/cc, is 1.1 to 1.6 g/cc;
    (2) $Dv_{50}$ of the hard carbon material is 6 $\mu$m to 15 $\mu$m; or
    (3) a specific surface area of the hard carbon material is 2 m$^2$/g to 10 m$^2$/g.

9. A negative electrode plate, comprising a negative current collector and a negative active material layer disposed on at least one surface of the negative current collector, wherein the negative active material layer comprises a negative active material according to any one of claims 1 to 8.

10. The negative electrode plate according to claim 9, wherein the negative active material layer satisfies at least one of the following conditions:

    (1) the negative active material layer further comprises artificial graphite, and a mass ratio A of the negative active material to the artificial graphite satisfies: $0 < A \leq 1/3$;
    (2) a compacted density PD of the negative active material layer, expressed in a unit of g/cm$^3$, is 1.0 g/cm$^3$ to 1.7 g/cm$^3$; or
    (3) a porosity of the negative active material layer is 15% to 30%.

11. An electrochemical device, comprising the negative electrode plate according to any one of claims 9 to 10.

12. An electrical device, comprising the electrochemical device according to claim 11.

5

FIG. 1

5

53

52
52

51

FIG. 2

FIG. 3

FIG. 4

## INTERNATIONAL SEARCH REPORT

| International application No. |
| --- |
| **PCT/CN2023/091185** |

| A. | CLASSIFICATION OF SUBJECT MATTER |
| --- | --- |

H01M4/587(2010.01)i; H01M10/0525(2010.01)i

According to International Patent Classification (IPC) or to both national classification and IPC

| B. | FIELDS SEARCHED |
| --- | --- |

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; VEN; WOTXT; USTXT; EPTXT; CNKI: 负极, 阳极, 硬碳, 微孔, 金属锂, 脱锂, 电位, negative electrode, anode, hard carbon, micropore, metallic lithium, delithiation, potential

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| E | CN 116022771 A (NINGDE AMPEREX TECHNOLOGY LTD.) 28 April 2023 (2023-04-28) description, paragraphs 2-145, and figures 1-2 | 1, 4-6, 8-12 |
| PX | CN 115458723 A (NINGDE AMPEREX TECHNOLOGY LTD.) 09 December 2022 (2022-12-09) description, paragraphs 5-199, and figure 4 | 1-12 |
| X | CN 1191195 C (INSTITUTE OF PHYSICS, CHINESE ACADEMY OF SCIENCES) 02 March 2005 (2005-03-02) description, page 1, paragraph 2 to page 11, paragraph 3, and figures 2-3 | 1-12 |
| X | CN 108963254 A (HANGZHOU ZHIDE NEW MATERIAL CO., LTD.) 07 December 2018 (2018-12-07) description, paragraphs 2-80, and figures 1-7 | 1-12 |
| A | US 2013252082 A1 (ENERG2 TECHNOLOGIES, INC.) 26 September 2013 (2013-09-26) entire document | 1-12 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **31 July 2023** | **02 August 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/091185**

| Patent document cited in search report | | | Publication date (day/month/year) | Patent family member(s) | | | Publication date (day/month/year) |
|---|---|---|---|---|---|---|---|
| CN | 116022771 | A | 28 April 2023 | None | | | |
| CN | 115458723 | A | 09 December 2022 | None | | | |
| CN | 1191195 | C | 02 March 2005 | JP | 2003535803 | A | 02 December 2003 |
| | | | | WO | 0198209 | A1 | 27 December 2001 |
| | | | | EP | 1288160 | A1 | 05 March 2003 |
| | | | | EP | 1288160 | B1 | 12 March 2008 |
| | | | | DE | 60133196 | D1 | 24 April 2008 |
| | | | | DE | 60133196 | T2 | 30 April 2009 |
| | | | | US | 2003157014 | A1 | 21 August 2003 |
| | | | | CN | 1422235 | A | 04 June 2003 |
| CN | 108963254 | A | 07 December 2018 | CN | 108963254 | B | 07 July 2020 |
| US | 2013252082 | A1 | 26 September 2013 | WO | 2013106782 | A2 | 18 July 2013 |

Form PCT/ISA/210 (patent family annex) (July 2022)

**REFERENCES CITED IN THE DESCRIPTION**

**Patent documents cited in the description**

- CN 202211206036
- GB 190772016 T

- GB T245862009 A